# EUROPÄISCHE PATENTSCHRIFT

(11) **EP 0 973 659 B1**
(45) Veröffentlichungstag und Bekanntmachung des Hinweises auf die Patenterteilung: **27.11.2002**
(21) Anmeldenummer: 98928156.3
(22) Anmeldetag: 08.04.1998
(51) Int. Cl.: B60R 11/02

(54) **VERFAHREN ZUR ERLANGUNG EINES DIEBSTAHLSSCHUTZES FÜR GERÄTE, INSBESONDERE FÜR AUTORADIOS**
METHOD FOR PROTECTING DEVICES, SPECIALLY CAR RADIOS, AGAINST THEFT
PROCEDE D'OBTENTION D'UNE PROTECTION ANTIVOL POUR APPAREILS, EN PARTICULIER POUR AUTORADIOS

(30) Priorität: 11.04.1997 DE 19715049
(43) Veröffentlichungstag der Anmeldung: 26.01.2000
(73) Patentinhaber: ROBERT BOSCH GMBH, 70442 Stuttgart (DE)
(72) Erfinder: PLUMEIER, Joerg, D-38229 Salzgitter (DE)
(86) Internationale Anmeldenummer: DE9800984
(87) Internationale Veröffentlichungsnummer: WO98046455

(56) Entgegenhaltungen:
- EP-A1- 0 767 087
- DE-A1- 4 242 186
- DE-C1- 3 641 230
- US-A- 4 759 062
- US-A- 5 594 793

## Beschreibung

Die Erfindung betrifft ein Verfahren zur Erlangung eines Diebstahlsschutzes für Geräte, insbesondere für Autoradios, wobei eine das Gerät identifizierende Kennung zur Aktivierung des Gerätes direkt am Gerät eingegeben werden muß.

### Stand der Technik

Ein Verfahren nach dem Oberbegriff des Anspruchs 1 ist aus dem Dokument US-A-4 759 062 bekannt.

Es ist bekannt, Autoradios mit einem Diebstahlsschutzcode zu versehen. Hierzu wird in einem dem Autoradio zugeordneten Speicher ein geheimer Code abgelegt. Dies kann beispielsweise in einem internen oder einem externen EEPROM (Electrical evaluated read only memory) geschehen. Zur Erstinbetriebnahme oder zur Wiederinbetriebnahme nach einer Unterbrechung der Spannungsversorgung für das Autoradio ist der Code direkt am Autoradio einzugeben. Dies kann entweder manuell über Eingabetasten oder über eine externe Codekarte geschehen. Eine in das Autoradio integrierte Prozessoreinheit vergleicht den abgespeicherten geheimen Code mit dem eingegebenen Code und gibt bei Übereinstimmung das Autoradio zur uneingeschränkten Benutzung frei.

Hierbei ist nachteilig, daß der in dem Autoradio abgelegte geheime Code in relativ einfacher Weise ausgelesen werden kann. Durch die Kenntnis des Codes über das unbefugte Auslesen kann das Autoradio auch von unbefugten Nutzern aktiviert werden.

### Vorteile der Erfindung

Das erfindungsgemäße Verfahren mit den im Anspruch 1 genannten Merkmalen bietet dagegen den Vorteil, daß eine unbefugte Benutzung eines diebstahlgeschützten Gerätes nicht möglich ist. Dadurch, daß die Codierung mittels eines nicht umkehrbaren Verschlüsselungsverfahrens aus einer dem Gerät zugeordneten Prüfinformation ermittelt wird, ist der Diebstahlsschutzcode selber in dem Gerät nicht abgelegt. Hierdurch wird verhindert, daß diese Codierung unberechtigterweise ausgelesen und für die unbefugte Inbetriebnahme des Gerätes mißbraucht werden kann. Als nicht umkehrbare Verschlüsselungsverfahren werden beispielsweise asymmetrische Verfahren, insbesondere das sogenannte RSA-Verfahren (Revest-Shamir-Edelmann-Verfahren) verwendet. Diese bieten den Vorteil einer sehr hohen kryptographischen Güte, das heißt, eine Entschlüsselung einer durch ein assymmetrisches Verfahren verschlüsselten Information ist nur durch systematisches Ausprobieren mit extrem hohem Zeit- und Rechenaufwand möglich, der in keinem wirtschaftlichen Verhältnis zum erzielbaren Nutzen steht.

In bevorzugter Ausgestaltung der Erfindung ist vorgesehen, daß in einem Prozessor beziehungsweise einem dem Prozessor zugeordneten Speicherelement des Gerätes ein öffentlicher Schlüssel des Verschlüsselungsverfahrens und die Verschlüsselungsausgangsinformation (Prüfinformation), insbesondere eine Seriennummer des zu schützenden Gerätes, abgelegt sind. In Kenntnis dieser Informationen ist es einem unbefugten Nutzer nicht möglich, die Codierung für eine uneingeschränkte Nutzung des zu schützenden Gerätes zu ermitteln. Erst durch externe Eingabe der Codierung über den berechtigten Benutzer, beispielsweise manuell oder mittels Codekarte, wird eine Berechnung der Prüfinformation möglich, deren Vergleich mit der abgespeicherten Prüfinformation bei Identität eine Freigabe des Gerätes ermöglicht.

In weiterer bevorzugter Ausgestaltung der Erfindung ist vorgesehen, daß neben der Prüfinformation ein Prüfalgorithmus im zu schützenden Gerät abgelegt wird. Hierdurch wird es vorteilhaft möglich, den Aufwand zur Verschlüsselung unter Beibehaltung eines nicht umkehrbaren Verschlüsselungsverfahrens zu minimieren. Ohne den relativ aufwendigen Einsatz eines kompletten, asymmetrischen Verfahrens kann auch so eine nicht umkehrbare Verschlüsselung erfolgen, indem zwar ein Prüfalgorithmus für eine Codierung, jedoch nicht der Bildungsalgorithmus der Codierung abgelegt wird. Der Prüfalgorithmus und die Prüfinformation, die auslesbar sind, gestatten es ebenfalls, nur unter erhöhtem Aufwand den Bildungsalgorithmus für die Codierung und damit die Codierung selber zu erhalten. Weitere vorteilhafte Ausgestaltungen der Erfindung ergeben sich aus den übrigen in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: schematisch eine Verschlüsselung eines Gerätes;
- Figur 2: schematisch eine Inbetriebnahme eines verschlüsselten Gerätes;
- Figur 3: schematisch eine Verschlüsselung eines Gerätes nach einem zweiten Ausführungsbeispiel und
- Figur 4 und 5: schematisch eine Inbetriebnahme eines nach dem zweiten Ausführungsbeispiel verschlüsselten Gerätes.

### Beschreibung der Ausführungsbeispiele

Anhand der nachfolgend erläuterten Ausführungsbeispiele wird von dem Erstellen und Verwenden einer Diebstahlsschutzcodierung für Autoradios ausgegangen. Prinzipiell ist dieses Verfahren jedoch für alle schützenswerten Geräte anwendbar.

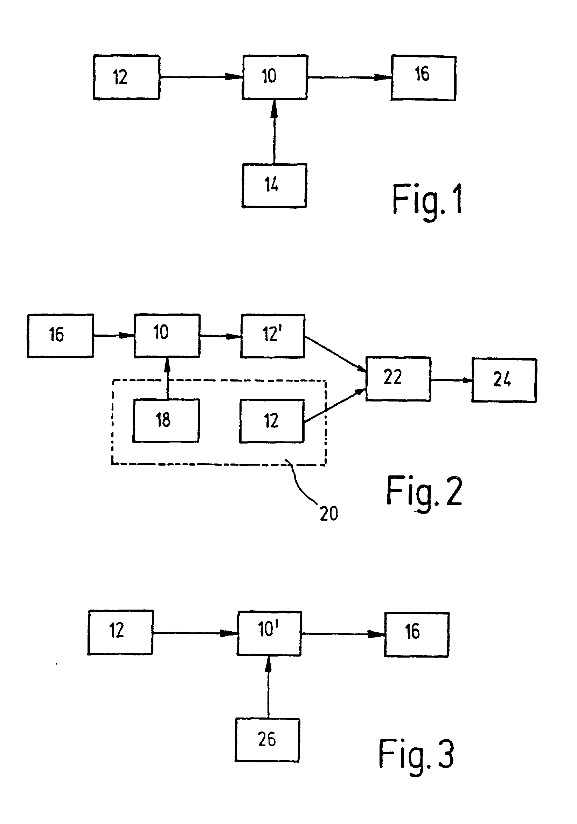

Figur 1 zeigt die Erstellung der erfindungsgemäßen Codierung. Hierbei wird ein asymmetrischer Verschlüsselungsalgorithmus 10 mit einer Prüfinformation 12 versorgt, die mit einem geheimen Schlüssel 14 bearbeitet wird, so daß eine Codierung 16 gebildet wird. Als Prüfinformation 12 kann beispielsweise die Seriennummer des zu schützenden Gerätes, also beispielsweise des Autoradios, dienen. Aus dieser Seriennummer oder einem Teil der Seriennummer, beispielsweise einer beliebigen Auswahl einzelner Stellen der Seriennummer, wird in gesicherter Umgebung bei der Herstellung des Autoradios mittels des geheimen Sschlüssels 14 die Codierung 16 gebildet. Die Codierung 16 wird dem Autoradio bei erstmaliger Auslieferung beziehungsweise bei gewollter Weitergabe beigelegt. Dies kann beispielsweise in Form einer schriftlichen Mitteilung über die Codierung oder in Form einer Codekarte, die die Codierung 16 in abgespeicherter Form aufweist, geschehen.

Das Autoradio selber enthält eine Prozessoreinheit, innerhalb der die Prüfinformation 12 als unveränderbare Information und ein öffentlicher Schlüssel 18 des verwendeten asymmetrischen Verschlüsselungsverfahrens 10 abgelegt ist.

Das in Figur 2 angedeutete Autoradio 20 enthält neben dem öffentlichen Schlüssel 18 und der Prüfinformation 12 also nicht die Codierung 16, die zur Inbetriebnahme beziehungsweise Wiederinbetriebnahme des Autoradios 20 notwendig ist. Zur befugten Inbetriebnahme beziehungsweise Wiederinbetriebnahme des Autoradios 20 gibt der befugte Nutzer die Codierung 16 dem Prozessor des Autoradios 20 ein. Dies kann beispielsweise mittels einer Tasteneingabe der schriftlich mitgeteilten Codierung 16 oder dem Eingeben einer Codekarte erfolgen. Das asymmetrische Verschlüsselungsverfahren 10 ermittelt aus der eingegebenen Codierung 16 und dem öffentlichen Schlüssel 18 eine berechnete Prüfinformation 12'. Die Prüfinformation 12' wird mit der unveränderbar eingespeicherten Prüfinformation 12 in einem Vergleicher 22 verglichen. Ergibt der Vergleich 22 eine Identität zwischen der Prüfinformation 12 und der berechneten Prüfinformation 12', wird das Autoradio 20 für eine uneingeschränkte Benutzung 24 freigegeben.

Es wird deutlich, daß bei einem Diebstahl des Autoradios 20 zwar der sowieso jedem zugängliche öffentliche Schlüssel 18 des verwendeten asymmetrischen Verschlüsselungsverfahrens 10 und die auch jedermann zugängliche Prüfinformation, beispielsweise die Seriennummer, zur Verfügung steht, aber die Codierung 16 zur Ermittlung der berechneten Prüfinformation 12' keinesfalls zur Verfügung steht. Die Codierung 16 kann auch nicht aus dem öffentlichen Schlüssel 18 des verwendeten asymmetrischen Verschlüsselungsverfahrens 10 ermittelt werden.

Es wird ohne weiteres deutlich, daß ohne Kenntnis der Codierung 16 die Inbetriebnahme beziehungsweise Wiederinbetriebnahme des Autoradios 20 ausgeschlossen ist.

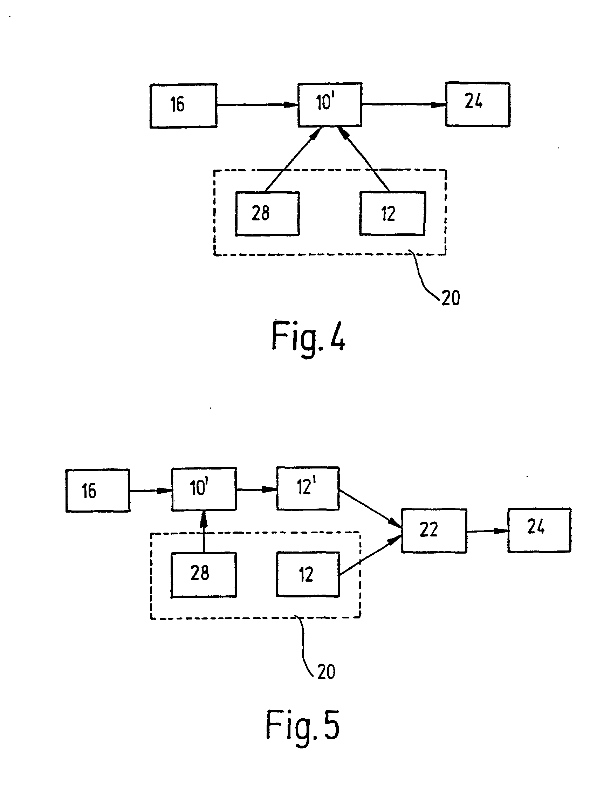

Da der Aufwand für das anhand der Figuren 1 und 2 beschriebene, nicht umkehrbare asymmetrische Verschlüsselungsverfahren für bestimmte Gruppen zu schützender Geräte in keinem Verhältnis zum wirtschaftlichen Nutzen steht, wird anhand der Figuren 3 und 4 ein vereinfachtes, nicht umkehrbares Verschlüsselungsverfahren beschrieben.

In zu Figur 1 analoger Weise wird einem Verschlüsselungsverfahren 10' die Prüfinformation 12, beispielsweise die Seriennummer des Autoradios, zugeführt. Über einen Bildungsalgorithmus 26 wird aus der Prüfinformation die Codierung 16 ermittelt. Die Codierung 16 wird wiederum dem Autoradio entweder schriftlich oder in Form einer Codekarte beigefügt.

Die Inbetriebnahme beziehungsweise Wiederinbetriebnahme des Autoradios 20 erfolgt, wie Figur 4 zeigt, durch Eingabe der Codierung 16 am Autoradio 20. Über das Verschlüsselungsverfahren 10' wird die Codierung 16 mit einem Prüfalgorithmus 28 und der Prüfinformation 12 beaufschlagt. Der Prüfalgorithmus 28 überprüft die Codierung 16 dahingehend, ob diese mit der Prüfinformation 12 in Verbindung bringbar ist. Wird durch den Prüfalgorithmus 28 festgestellt, daß die Codierung 16 zu dem die Prüfinformation 12 enthaltenden Autoradio 20 gehört, erfolgt die Freigabe für eine uneingeschränkte Benutzung 24 des Autoradios 20.

Das anhand der Figuren 3 und 4 erläuterte, nicht umkehrbare Verschlüsselungsverfahren zeichnet sich ebenfalls dadurch aus, daß im Autoradio 20 selber weder die Codierung 16 noch der Bildungsalgorithmus 26 der Codierung 16 enthalten ist. Es sind lediglich die Prüfinformation 12 und der Prüfalgorithmus 28 enthalten, der auch durch unbefugtes Auslesen nicht ein unmittelbares Zugreifen auf die Codierung 16 gestattet. Erst durch aufwendige Analyseverfahren für den Prüfalgorithmus 28 kann auf den Bildungsalgorithmus 26 für das Codewort 16 rückgeschlossen werden. Somit wird auch mit diesem vereinfachten, nicht umkehrbaren Verschlüsselungsverfahren ein Diebstahlsschutz für Autoradios 20 beziehungsweise für andere schützenswerte Geräte erreicht.

Je nach Schutzbedürfnis der zu sichernden Geräte kann zwischen dem aufwendigeren asymmetrischen Verschlüsselungsverfahren gemäß Figur 1 und 2 oder dem einfacheren pseudo-asymmetrischen Verschlüsselungsverfahren gemäß Figur 3 und 4 ausgewählt werden.

In Figur 5 ist die Inbetriebnahme eines nach dem zweiten Ausführungsbeispiel verschlüsselten Gerätes dargestellt, bei dem die Codierung 16 und der Prüfalgorithmus 28 dem Verschlüsselungsverfahren 10' zugeführt werden, das daraus die Prüfinformation 12' erzeugt. Der Prüfalgorithmus 28 befindet sich dabei zusammen mit der Prüfinformation 12 im Autoradio 20. Im Vergleicher 22 wird die Prüfinformation 12' mit der Prüfinformation 12 im Autoradio verglichen und bei Identität die uneingeschränkte Benutzung 24 des Autoradios freigegeben.

## Patentansprüche

1. Verfahren zur Verhinderung einer unbefugten Benutzung eines Gerätes (20), insbesondere eines Autoradio, wobei eine dem Gerät zugeordnete Codierung (16) zur Aktivierung des Geräts (20) direkt am Gerät (20) eingegeben werden muß, **dadurch gekennzeichnet, daß** aus der Codierung (16) mittels eines nicht umkehrbaren Verschlüsselungsverfahrens (10) eine Prüfinformation (12') gebildet wird und daß zur Freigabe die Prüfinformation (12') mit einer in dem Gerät (20) abgespeicherten Prüfinformation (12) verglichen wird.

2. Verfahren nach Anspruch 1, **dadurch gekennzeichnet, daß** für die Verschlüsselung ein asymmetrisches Verschlüsselungsverfahren verwendet wird.

3. Verfahren nach Anspruch 2, **dadurch gekennzeichnet, daß** das Rivest-Shamir-Adlemann-Verfahren verwendet wird.

4. Verfahren nach einem der vorhergehenden Ansprüche, **dadurch gekennzeichnet, daß** die Codierung (16) mittels eines geheimen Schlüssels (14) an einem gesicherten Ort für jedes Gerät ermittelt werden kann.

5. Verfahren nach einem der vorhergehenden Ansprüche, **dadurch gekennzeichnet, daß** im Gerät (20) ein öffentlicher Schlüssel (18) für die Codierung (16) und eine abgespeicherte Prüfinformation (12) abgelegt ist.

6. Verfahren nach Anspruch 1 oder 2, **dadurch gekennzeichnet, daß** im Gerät (20) ein Prüfalgorithmus (28) für die Codierung (16) und die abgespeicherte Prüfinformation (12) abgelegt ist.

7. Verfahren nach einem der vorhergehenden Ansprüche, **dadurch gekennzeichnet, daß** als abgespeicherte Prüfinformation (12) eine Seriennummer oder ein Teil der Seriennummer des Gerätes (20) verwendet wird.

## Claims

1. Method for preventing an unauthorized use of a device (20), in particular of a car radio, it being necessary to input a code (16), assigned to the device, directly at the device (20) in order to activate the device (20), **characterized in that** a check information item (12') is formed from the code (16) by means of an irreversible encryption method (10), and **in that**, for enabling purposes, the check information item (12') is compared with a check information item (12) stored in the device (20).

2. Method according to Claim 1, **characterized in that** an asymmetrical encryption method is used for the encryption.

3. Method according to Claim 2, **characterized in that** the Rivest-Shamir-Adelman method is used.

4. Method according to one of the preceding claims, **characterized in that** the code (16) can be determined by means of a secret key (14) at a secure location for each device.

5. Method according to one of the preceding claims, **characterized in that** a public key (18) for the code (16) and a stored check information item (12) are stored in the device (20) .

6. Method according to Claim 1 or 2, **characterized in that** a check algorithm (28) for the code (16) and the stored check information item (12) are stored in the device (20).

7. Method according to one of the preceding claims, **characterized in that** a serial number or part of the serial number of the device (20) is used as the stored check information item (12).

## Revendications

1. Procédé pour interdire l'utilisation non autorisée d'un appareil (20), notamment d'un autoradio,
selon lequel
on introduit directement dans l'appareil (20) un codage (16) associé à l'appareil pour activer l'appareil (20), à partir du codage (16) et à l'aide d'un procédé de cryptage (10) non réversible on forme une information de contrôle (12') et on compare l'information de contrôle (12') à une information de contrôle (12) mémorisée dans l'appareil de commande (20) pour libérer l'information de contrôle (12').

2. Procédé selon la revendication 1,
**caractérisé en ce qu'**
on utilise un procédé de codage asymétrique pour le cryptage.

3. Procédé selon la revendication 2,
**caractérisé en ce qu'**
on utilise le procédé « Rivest-Shamir-Adlemann ».

4. Procédé selon l'une quelconque des revendications précédentes,
**caractérisé en ce qu'**
on effectue le codage (16) à l'aide d'une clef commune (14) à un emplacement protégé pour chaque appareil.

5. Procédé selon l'une quelconque des revendications précédentes,
**caractérisé en ce qu'**
on enregistre dans l'appareil (20) une clef officielle (18) pour le codage (16) et une information de contrôle (12) enregistrée.

6. Procédé selon l'une quelconque des revendications 1 ou 2,
**caractérisé en ce qu'**
on enregistre, dans l'appareil (20), un algorithme de contrôle (28) pour le codage (16) et pour l'information de contrôle, enregistré en mémoire (12).

7. Procédé selon l'une quelconque des revendications précédentes,
**caractérisé en ce que**
comme information de contrôle (12) enregistrée on utilise un numéro de série ou une partie d'un numéro de série enregistré de l'appareil (20).
